# EUROPEAN PATENT SPECIFICATION

(11) **EP 1 060 197 B1**
(45) Date of publication and mention of the grant of the patent: **02.06.2004**
(21) Application number: 99909400.6
(22) Date of filing: 03.03.1999
(51) Int. Cl.: C08F 8/32, D21H 21/16

(54) **AQUEOUS DISPERSION OF A POLYMER**
WÄSSERIGE DISPERSIONEN VON POLYMEREN
DISPERSION AQUEUSE D'UN POLYMERE

(30) Priority: 04.03.1998 NL 1008469
(43) Date of publication of application: 20.12.2000
(73) Proprietor: DSM IP Assets B.V., 6411 TE Heerlen (NL)
(72) Inventor: VAN DEN BERG, Hendrik, Jan, NL-6438 HZ Schinnen (NL); MAASSEN, Mathijs, Hubert, Gertrudes, NL-6171 XT Stein (NL); STEENBAKKERS, Laurentius, Wilhelmus, NL-6141 MB Sittard (NL)
(86) International application number: PCT/NL1999/000112
(87) International publication number: WO 1999/045039

(56) References cited:
- EP-A- 0 728 767
- WO-A-93/17050
- DE-A- 3 430 802
- DE-A- 3 819 968
- DE-A- 4 112 535
- DE-A- 4 342 157
- FR-A- 2 369 380
- PATENT ABSTRACTS OF JAPAN vol. 010, no. 112 (C-342), 25 April 1986 & JP 60 243102 A (DENKI KAGAKU KOGYO KK), 3 December 1985

## Description

The invention relates to an aqueous dispersion of a polymer, which polymer has been obtained by subjecting a starting polymer which contains maleic anhydride monomer units and vinyl aromatic monomer units to an imidization reaction. The invention also relates to a process for the preparation of the dispersion, to the use of the dispersion in a paper-sizing composition, and to the use of the paper-sizing composition for the production of paper.

Aqueous dispersions of a polymer, which polymer has been obtained by subjecting a starting polymer which contains maleic anhydride monomer units and vinyl aromatic monomer units to an imidization reaction, are known from DE-A-1720746. The polymer in the known dispersions is obtained from a copolymer of styrene and maleic anhydride, and after it has been subjected to the imidization reaction it contains no more, or virtually no more, maleic anhydride monomer units.

A drawback of the known dispersions is that use of these dispersions in a paper-sizing composition does not lead to a paper-sizing composition that adequately reduces the water-absorption property of paper, and furthermore use of this paper-sizing composition does not result in paper with good ink-jet printing properties, such as, for instance, wicking, bleeding and blackness. The invention aims to provide a dispersion that does not have said drawbacks.

Surprisingly, this aim is achieved in that the starting polymer contains 7-50 mole% of maleic anhydride monomer units and the imidization reaction has been carried out in such a way that at most 75% of the monomer units of maleic anhydride has been imidized.

The dispersion according to the invention can very well be used to obtain a paper-sizing composition that sufficiently reduces the water-absorption property of paper, and in addition use of this composition results in paper with good ink-jet printing properties. The paper-sizing compositions according to the invention are particularly suitable for surface sizing. A paper-sizing composition containing the dispersion according to the invention also exhibits good foaming behaviour, i.e. little foaming occurs during use of the composition.

It is noted that the German patent specification DE-A-4342157 also discloses an aqueous dispersion with good properties for use in paper-sizing compositions. The dispersion disclosed in said patent specification is prepared by imidizing maleic anhydride monomer units (MA) in a styrene-maleic anhydride copolymer (SMA) to at least 90% with a mixture containing various amines, amino alcohol and a volatile organic acid. According to the introduction to the specification of said patent this mixture is needed to impart good paper-sizing properties to the dispersion. A drawback of these known dispersions is that relatively many different and rather specific chemicals are needed for their preparation, and that there are highly specific requirements as to the composition.

Dispersion is here understood to be a continuous liquid phase with discrete polymer particles.

In a preferred embodiment of the dispersion according to the invention 50-70% of the maleic anhydride monomer units of the starting polymer has been imidized.

The starting polymer used to prepare the dispersion contains maleic anhydride (MA) monomer units and vinyl aromatic monomer units. Suitable vinyl aromatic monomer units are, for instance, styrene and alpha-methylstyrene. The starting polymer preferably contains'styrene monomer units. Besides monomer units MA and vinyl aromatic monomer units, the starting polymer may contain other monomer units.

A copolymer containing vinyl aromatic monomer units and MA monomer units can be prepared using the known processes, for instance using the process described for the preparation of a copolymer of maleic anhydride and styrene monomer units, by Hanson and Zimmerman, Ind. Eng. Chem., vol. 49, No. 11 (1957), pp. 1803-1807. Preferably, the starting polymer contains 18-50 mole% maleic anhydride monomer units and 50-82 mole% styrene monomer units. More preferably, the starting polymer contains 22-36 mole% maleic anhydride monomer units and 64-78 mole% styrene monomer units. The molar weight of the starting polymer may vary within wide limits. Preferably, a starting polymer has a weight-average molecular weight of between 50,000 and 180,000 kg/kmol.

In a possible process for the preparation of an aqueous dispersion according to the invention the starting polymer is introduced into an autoclave together with an aqueous solution of NH₃ or an amine, the temperature being at least 95°C, the molar ratio of maleic anhydride monomer units and NH₃, or maleic anhydride and amine, being between 1:0.8 and 1:5, and the pressure being so high that the aqueous solution does not start to boil. The time needed for at most 75% imidization of the maleic anhydride monomer units in the starting polymer depends on the chosen temperature, the reactor, the amounts started from, and the like, and can readily be determined by experiment. The imidization reaction can be stopped, or at any rate be strongly slowed down, by reducing the temperature to below 95°C.

In a preferred embodiment of the process, the temperature is between 100 and 130 °C since at that temperature a dispersion that is very well defined in terms of properties and composition can be obtained with a high reproducibility. The molar ratio of maleic anhydride monomer units and NH₃ or maleic anhydride and amine is preferably between 1:1.5 and 1:2.5. Preferably, use is made of ammonia or an aliphatic amine, which aliphatic amine is a primary amine. Examples of suitable amines are butylamine and stearylamine.

It is possible to add an emulsifier to the reaction mixture. Addition of an emulsifier promotes the formation of the dispersion according to the invention.

Examples of suitable emulsifiers are the sodium salt of (C₁₀-C₁₁) alkyl-benzene sulphonic acid, stearyl dimethylbenzyl ammonium chloride and ethylene oxide-propylene oxide copolymers.

The dispersion according to the invention is very suitable for forming part of paper-sizing compositions. Besides a dispersion according to the invention paper-sizing compositions contain one or more of the usual additives. Preferably, starch is used as an additive. The amount of dispersion contained in the composition is so large that the amount of polymer. i.e. the dry weight of polymer particles in the dispersion, is for instance between 0.2 and 10 wt.%. relative to the dry weighs of the other customary additives. Preferably, a paper-sizing composition contains between 2 and 5 wt.% of dry weight of polymer particles, relative to the dry weight of starch. A composition can for instance be prepared by adding a certain amount of the dispersion according to the invention to a solution of the other additives in water.

The invention will be elucidated with reference to examples, without however being limited thereto.

### EXAMPLES AND COMPARATIVE EXPERIMENTS

### Preparation of dispersions

A number of dispersions was prepared by introducing 3.0 kg of an SMA polymer consisting of 26 wt.% maleic anhydride monomer units and 74 wt.% styrene monomer units (SMA sz26080 (DSM, The Netherlands), with an intrinsic viscosity of 0.35 dl/g (0.2 g SMA per dl tetrahydrofuran (THF), 25°C), with a solution of NH₃ in demineralized water into a 10-litre autoclave. The autoclave was provided with a stirrer and with means for drawing samples from the reactor during the reaction. N₂ was then used to raise the autoclave pressure to 6 bar (6.10⁵ Pa). Stirring took place at a speed of 200-215 rpm. The autoclave was heated at a rate of 4°/minute until the desired reaction temperature had been reached. This caused the pressure to increase. After a certain time the imidization reaction was stopped by lowering the reaction temperature to 50°C. Table 1 presents the amounts of starting material used and the other reaction parameters for a number of dispersions according to the invention. The reaction time stands for the time between the moment the reaction temperature is reached and the moment cooling is started.

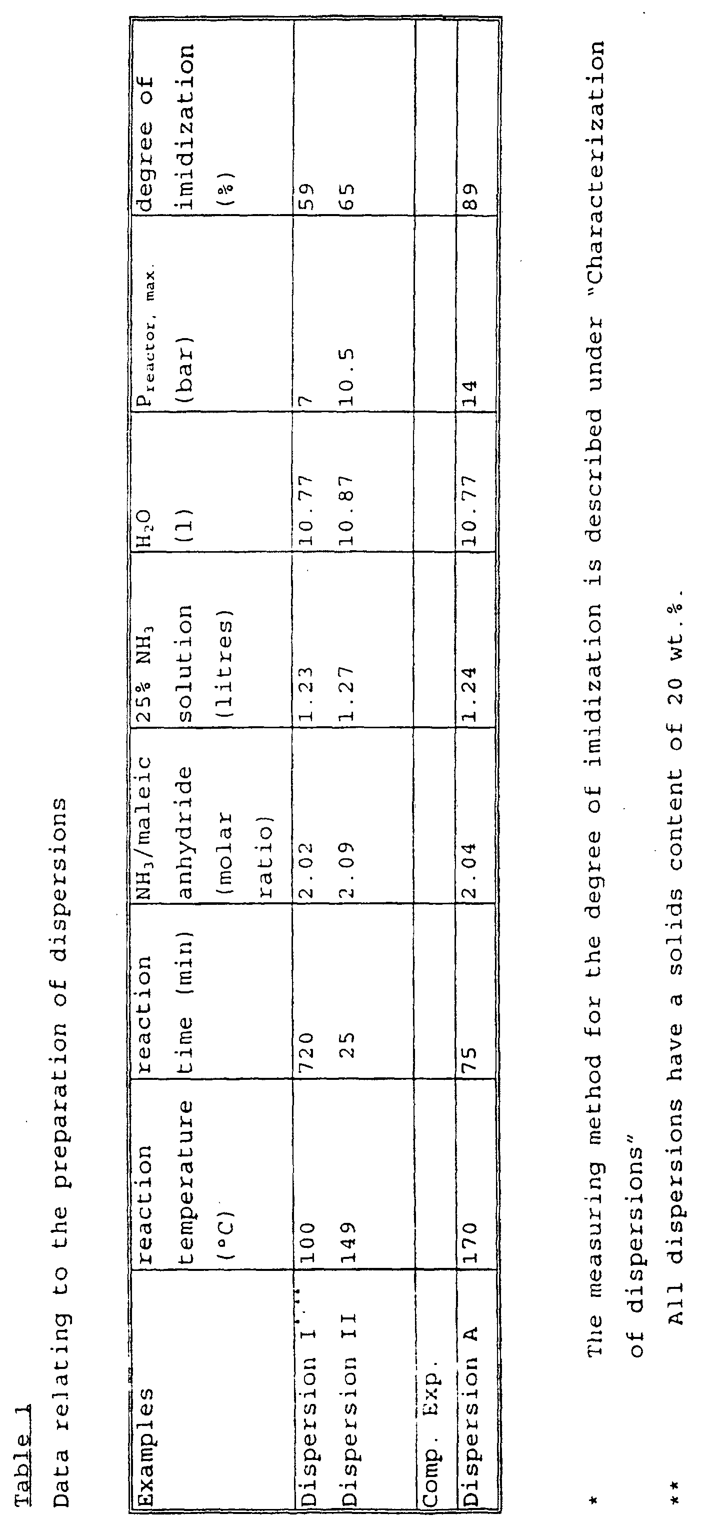

Dispersions I and II in the Examples of Table I are dispersions according to the invention. The dispersion in the Comparative Experiment, dispersion A, is a dispersion according to the state of the art.

Table I shows that the degree of imidization increases with the reaction temperature and/or reaction time of the imidization reaction.

### Determination of the degree of imidization

The degree of imidization of the aqueous dispersions was measured by means of Fourier Transform Infrared Spectroscopy (FTIR). Use was made of a Perkin Elmer spectrum 2000 spectrophotometer or a Perkin Elmer 1760 FTIR spectrophotometer. The aqueous dispersions were measured directly, using a liquid Attenuated Total Reflection (ATR) cell (window: ZnSe, angle of incidence 45°). The spectra were recorded with the standard parameter settings:
resolution: 4 cm⁻¹
data interval: 1 cm⁻¹
gain: 1
wavelength: 4000-400 cm⁻¹

Using the same cell and the same conditions, a background spectrum of water was recorded. This background spectrum was "deducted" from the other spectra (compensated at the peak maximum of the water signal (around 1630 cm⁻¹)) so as to reduce the interfering effect of water on the area most relevant to these measurements (between 1800 and 1100 cm⁻¹). The absorptions considered were those caused by:
- aromatic ring (around 1493 cm⁻¹)
- C=O group of the imide group (around 1712 cm⁻¹)
- C-N stretch vibrations of imide group (around 1183 cm ¹) (also referred to as amide III)
- C=O of carboxylate group (around 1555 cm⁻¹) and
- C-N stretch vibration of primary amide (around 1405 cm⁻¹).
By stating which vibrations of the molecules are responsible for the various absorption bands, it is unambiguously clear which absorption bands are to be measured.

The absorptions of the aromatic ring of the polymer backbone (around 1493 cm⁻¹) do not change as a result of the imidization reaction upon an increase in reaction time. The absorptions caused by imide monomer units, on the other hand, increase in relative size and the absorptions caused by the ammonium salts of amide acid groups decrease in relative size when the reaction time increases. Amide acid groups are formed from the maleic anhydride monomer units, the anhydride ring of which opens in a basic solution of NH₃, upon which a primary amide and an acid group are formed, which together are called amide acid. In a basic environment the acid group of the amide acid donates a proton to ammonia, so that an ammonium salt of the amide acid group is formed. All maleic anhydride monomer units in the starting polymer thus undergo a change during the preparation of the dispersions.

To be able to quantify the percentage of maleic anhydride monomer units that has been converted into imide monomer units, the peak heights of the said absorption bands were measured at their maximum, and as reference samples use was made of an aqueous ammonia solution of SMA (26 mole% maleic anhydride, 74 mole% styrene, NH₃ : maleic anhydride molar ratio = 3 : 1, prepared at 50°C, no imide monomer units) and an imidized SMA powder. The imidized SMA powder was prepared by mixing 2 g SMA (28 wt.% maleic anhydride; 72 wt.% styrene monomer units, molar weight 110,000 kg/mol) with 0.50 g urea in a twin-screw mini-extruder at 240°C for 5 minutes, at a speed of 100 rpm. The glass transition temperature of the imidized SMA powder was 193°C.

Via a KBr specimen an IR spectrum of the imidized SMA polymer was recorded on a Perkin Elmer Paragon 1600 infrared spectrophotometer. From the absence of absorption peaks caused by anhydride groups it was concluded that the SMA had been fully imidized. The IR spectrum of the solution was measured in the same way as the spectra of the dispersions. The absorptions of the imidized SMA powder were converted to 26 wt.% maleic anhydride and 76 wt.% styrene monomer units.

The degree of imidization was calculated by successively passing through a number of steps. First the absorption level measured in the peak maximum at 1712 cm' ¹, 1555 cm⁻¹, 1405 cm⁻¹ and 1183 cm⁻¹, respectively, was divided by the peak height of the absorption at 1493 cm⁻¹, from the same spectrum. In the same way, relative peak heights were determined for the SMA solution and the imidized SMA powder. Then the relative peak heights of the dispersions were divided by the relative peak heights of the references at the wavelength in question. After that, the figures thus obtained related to the peak heights at 1555 and 1405 cm⁻¹ were deducted from 1 and subsequently multiplied by 100%, and the figures thus obtained, related to the peak heights at 1183 and 1712 cm⁻¹, were multiplied by 100%. Of the four values obtained the average was calculated. The average value indicates the imidization percentage, that is to say, the percentage of maleic anhydride monomer units of the maleic anhydride monomer units originally present that has been imidized.

### Use of dispersions in paper-sizing compositions

### Paper-sizing compositions

Paper-sizing compositions were prepared by successively dissolving 10 wt.% starch, relative to the amount of demineralized water, in demineralized water, and adding a dispersion as described in Table 1 to the resulting solution, in such a way that the quantity of the polymer (in dry condition) amounted to 4 wt.% of the quantity of starch (in dry condition). Tests were conducted with two different types of starch: Amylis 108 (supplied by Roquette, of France), which starch is an oxidized potato starch, and with SEP, an ester-modified potato starch. 20 g of the paper-sizing composition was applied per m² of paper, which corresponds to 2 g/m² of polymer and starch, use being made of a size press. A size press comprises two abutting rolls. In between the rolls, above their contact area, there is a kind of slot, for the rolls touch one another only at the widest point. In that slot, at the top between the two rolls, the paper-sizing composition is applied. In order to apply the paper-sizing composition to paper, a sheet of paper was pulled through the two rolls, the sheet thus passing first through the paper-sizing composition and then being pulled between the two rolls. As paper a wood-free basis paper was used, which had internally been sized with an alkene-ketene dimer (AKD) and which had a Cobb₆₀ value of 30 g/m².

### Measurement of paper properties

The water-absorption capacity of paper was measured according to DIN EN 205353, and expressed as the Cobb₆₀ value, in g/m². For good results with water-soluble ink, the Cobb₆₀ value should be relatively low. The printing properties, such as wicking, bleeding and blackness, were determined using a Hewlett-Packard (HP) 560 ink-jet printer, according to the HP test criteria for a HP 560 printer (available from Hewlett Packard), the ink being water-soluble ink suitable for an HP ink-jet printer of the type used. The printing property "wicking" is a measure of the definition of the edges of characters printed on paper, and "bleeding" is a measure of the running off of the characters (that is to say, of the ink used to print the characters on the paper). When different colours of ink are used in adjoining areas, bleeding may lead to mixing of colours at the interfaces of different colour areas. Another criterion is the blackness of characters printed with a black ink containing carbon black or with a combination of different colours of ink, which combination is black to the eye, on a sheet of paper treated with the paper-sizing composition. In general, a deep black colour of the characters is preferred to a less black or even grey colour.

From Table 2 it appears that use of compositions containing a dispersion according to the invention results in paper having a lower Cobb₆₀ value and better printing properties than paper treated with a paper-sizing composition that contained a dispersion according to the state of the art.

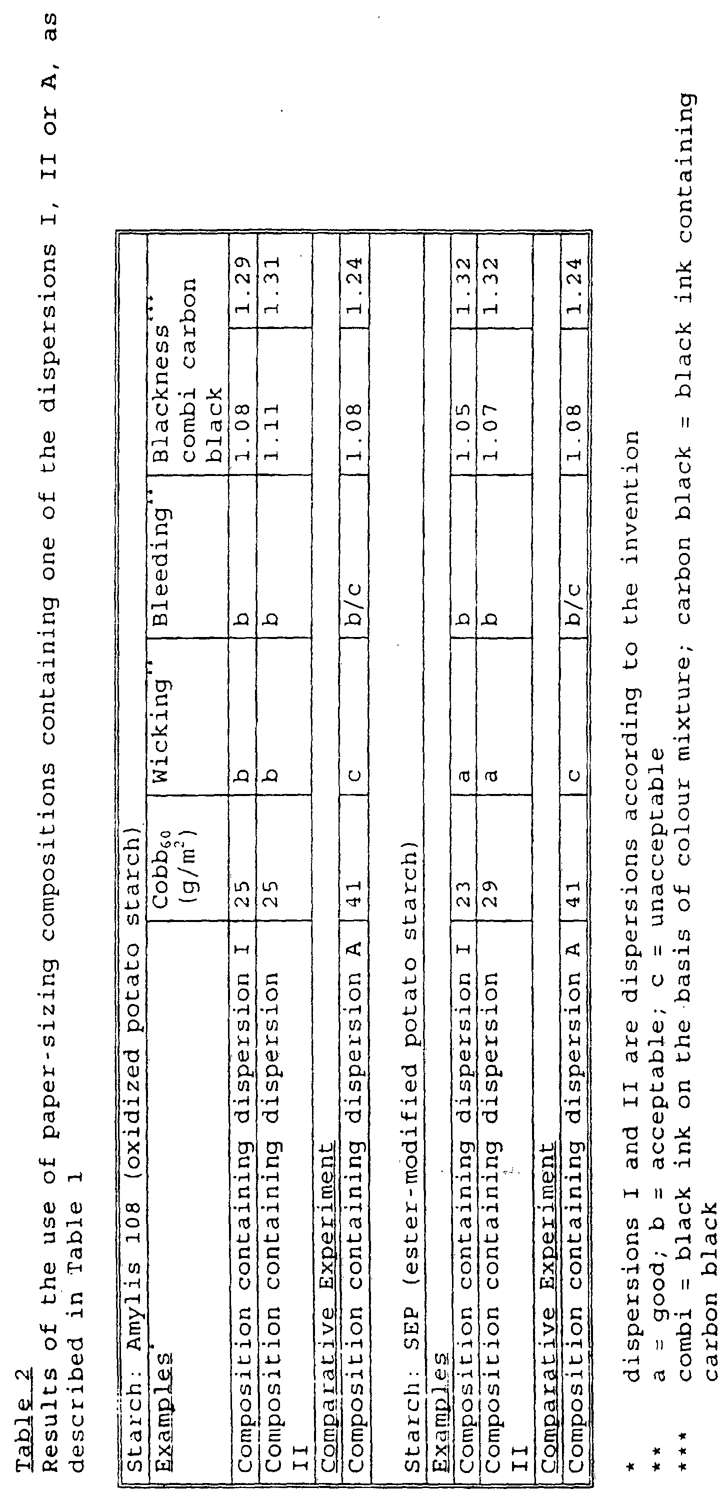

## Claims

1. Aqueous dispersion of a polymer, which polymer has been obtained by subjecting a starting polymer which'contains maleic anhydride monomer units and vinyl aromatic monomer units to an imidization reaction, **characterized in that** the starting polymer contains 7-50 mole% maleic anhydride monomer units and the imidization reaction has been carried out in such a way that at most 75% of the maleic anhydride monomer units has been imidized.

2. Aqueous dispersion according to claim 1, **characterized in that** 50-70% of the maleic anhydride monomer units of the starting polymer has been imidized.

3. Aqueous dispersion according to either of claims 1-2, **characterized in that** the starting polymer is a polymer containing maleic anhydride monomer units and styrene monomer units.

4. Aqueous dispersion according to claim 3, **characterized in that** the starting polymer contains 18-50 mole% maleic anhydride monomer units and 50-82 mole% styrene monomer units.

5. Aqueous dispersion according to claim 3, **characterized in that** the starting polymer contains 22-36 mole% maleic anhydride monomer units and 64-78 mole% styrene monomer units.

6. Aqueous dispersion according to either of claims 3-5, **characterized in that** the starting polymer has a weight-average molecular weight of between 50,000 and 180,000 kg/mol.

7. Process for the preparation of an aqueous dispersion according to any one of claims 1-6, in which the starting polymer is introduced into an autoclave together with an aqueous solution of NH₃ or an amine, **characterized in that** the temperature is at least 95°C, the molar ratio of maleic anhydride monomer units and NH₃ or maleic anhydride and amine is between 1:0.8 and 1:5 and the pressure is so high that the aqueous solution does not start to boil.

8. Process according to claim 7, **characterized in that** the temperature is between 100 and 130°C.

9. Process according to either of claims 7-8, **characterized in that** the molar ratio of maleic anhydride monomer units and NH₃, or maleic anhydride and amine, lies between 1:1.5 and 1:2.5.

10. Paper-sizing composition containing an aqueous dispersion according to any one of claims 1-6, and one or more of the customary additives.

11. Paper-sizing composition according to claim 10, **characterized in that** the composition contains starch and between 2 and 6 wt.%, relative to the starch, of polymer particles.

12. Use of the paper-sizing composition according to either of claims 10 or 11 for the preparation of paper.

## Patentansprüche

1. Wässerige Dispersion eines Polymers, welches Polymer durch Unterwerfen eines Ausgangspolymers, welches Maleinsäureanhydrid-Monomereinheiten und vinylaromatische Monomereinheiten enthält, unter eine Imidisierungsumsetzung erhalten wird, **dadurch gekennzeichnet, dass** das Ausgangspolymer 7-50 Mol-% Maleinsäureanhydrid-Monomereinheiten enthält und die Imidisierungsumsetzung auf solche Weise durchgeführt worden ist, dass höchstens 75% der Maleinsäureanhydrid-Monomereinheiten imidisiert worden sind.

2. Wässerige Dispersion gemäß Anspruch 1, **dadurch gekennzeichnet, dass** 50-70% der Maleinsäureanhydrid-Monomereinheiten des Ausgangspolymers imidisiert worden sind.

3. Wässerige Dispersion gemäß einem der Ansprüche 1-2, **dadurch gekennzeichnet, dass** das Ausgangspolymer ein Polymer ist, welches Maleinsäureanhydrid-Monomereinheiten und Styrol-Monomereinheiten enthält.

4. Wässerige Dispersion gemäß Anspruch 3, **dadurch gekennzeichnet, dass** das Ausgangspolymer 18-50 Mol-% Maleinsäureanhydrid-Monomereinheiten und 50-82 Mol-% Styrol-Monomereinheiten enthält.

5. Wässerige Dispersion gemäß Anspruch 3, **dadurch gekennzeichnet, dass** das Ausgangspolymer 22-36 Mol-% Maleinsäureanhydrid-Monomereinheiten und 64-78 Mol-% Styrol-Monomereinheiten enthält.

6. Wässerige Dispersion gemäß einem der Ansprüche 3-5, **dadurch gekennzeichnet, dass** das Ausgangspolymer eine massegemittelte Molekülmasse von zwischen 50000 und 180000 kg/kmol hat.

7. Verfahren zur Herstellung einer wässerigen Dispersion gemäß einem der Ansprüche 1-6, wobei das Ausgangspolymer in einen Autoklaven eingeführt wird, zusammen mit einer wässerigen Lösung aus NH₃ oder einem Amin, **dadurch gekennzeichnet, dass** die Temperatur mindestens 95°C beträgt, das Molverhältnis von Maleinsäureanhydrid-Monomereinheiten und NH₃ oder Maleinsäureanhydrid und Amin zwischen 1:0,8 und 1:5 beträgt und der Druck so hoch ist, dass die wässerige Lösung nicht anfängt zu sieden.

8. Verfahren gemäß Anspruch 7, **dadurch gekennzeichnet, dass** die Temperatur zwischen 100 und 130°C beträgt.

9. Verfahren gemäß einem der Ansprüche 7-8, **dadurch gekennzeichnet, dass** das Molverhältnis von Maleinsäureanhydrid-Monomereinheiten und NH₃ oder Maleinsäureanhydrid und Amin zwischen 1:1,5 und 1:2,5 liegt.

10. Papierleimungszusammensetzung, welche eine wässerige Dispersion gemäß einem der Ansprüche 1-6 und einen oder mehrere der üblichen Zusatzstoffe enthält.

11. Papierleimungszusammensetzung gemäß Anspruch 10, **dadurch gekennzeichnet, dass** die Zusammensetzung Stärke und zwischen 2 und 6 Gew.-%, bezogen auf die Stärke, an Polymerpartikeln enthält.

12. Verwendung der Papierleimungszusammensetzung gemäß einem der Ansprüche 10 oder 11 für die Herstellung von Papier.

## Revendications

1. Dispersion aqueuse d'un polymère, lequel polymère a été obtenu en soumettant un polymère de départ contenant des unités monomères d'anhydride maléique et des unités monomères aromatiques de vinyle à une réaction d'imidisation, **caractérisée en ce que** le polymère de départ contient 7 à 50 % en moles d'unités monomères d'anhydride maléique et la réaction d'imidisation a été réalisée d'une manière telle qu'au plus 75 % des unités monomères d'anhydride maléique ont été imidisées.

2. Dispersion aqueuse selon la revendication 1, **caractérisée en ce que** 50 à 70 % des unités monomères d'anhydride maléique du polymère de départ ont été imidisées.

3. Dispersion aqueuse selon l'une quelconque des revendications 1 à 2, **caractérisée en ce que** le polymère de départ est un polymère contenant des unités monomères d'anhydride maléique et des unités monomères de styrène.

4. Dispersion aqueuse selon la revendication 3, **caractérisée en ce que** le polymère de départ contient 18 à 50 % en moles d'unités monomères d'anhydride maléique et 50 à 82 % en moles d'unités monomères de styrène.

5. Dispersion aqueuse selon la revendication 3, **caractérisée en ce que** le polymère de départ contient 22 à 36 % en moles d'unités monomères d'anhydride maléique et 64 à 78 % en moles d'unités monomères de styrène.

6. Dispersion aqueuse selon l'une quelconque des revendications 3 à 5, **caractérisée en ce que** le polymère de départ a un poids moléculaire moyen en poids se situant entre 50 000 et 180 000 kg/mol.

7. Procédé pour la préparation d'une dispersion aqueuse selon l'une quelconque des revendications 1 à 6, dans lequel le polymère de départ est introduit dans un autoclave avec une solution aqueuse de NH₃ ou une amine, **caractérisé en ce que** la température est d'au moins 95 °C, le rapport molaire des unités monomères d'anhydride maléique et de NH₃ ou de l'anhydride maléique et de l'amine se situe entre 1:0,8 et 1:5 et la pression est suffisamment élevée pour que la solution aqueuse ne commence pas à bouillir.

8. Procédé selon la revendication 7, **caractérisé en ce que** la température se situe entre 100 et 130 °C.

9. Procédé selon l'une quelconque des revendications 7 à 8, **caractérisé en ce que** le rapport molaire des unités monomères d'anhydride maléique et de NH₃ ou de l'anhydride maléique et de l'amine, se situe entre 1:1,5 et 1:2,5.

10. Composition d'encollage de papier contenant une dispersion aqueuse selon l'une quelconque des revendications 1 à 6, et un ou plusieurs des additifs habituels.

11. Composition d'encollage de papier selon la revendication 10, **caractérisée en ce que** la composition contient de l'amidon et entre 2 à 6 % en poids, relativement à l'amidon, de particules de polymère.

12. Utilisation de la composition d'encollage de papier selon l'une quelconque des revendications 10 ou 11 pour la préparation de papier.
